# EUROPEAN PATENT APPLICATION

(11) **EP 3 364 508 A1**
(43) Date of publication of application: **22.08.2018**
(21) Application number: 18156910.4
(22) Date of filing: 15.02.2018
(51) Int. Cl.: H01R 39/38, H01R 39/26, H02K 5/14

(54) **HOLDER FOR SLIP RING BRUSHES**

(30) Priority: 15.02.2017 EP 17156358
(71) Applicant: Schleifring GmbH, 82256 Fürstenfeldbruck (DE)
(72) Inventor: Heinbuch, Peter, 82256 Fürstenfeldbruck (DE); Holzapfel, Christian, 82256 Fürstenfeldbruck (DE); Doll, Marvin, 82284 Grafrath (DE)
(74) Representative: Lohr, Georg

(57) **Abstract**

A brush holder for slipring brushes comprises a brush mount held by a lever at a base. The lever is connected by a base pivot to the base and is pivotable in a main plane. A spring is provided between the base and the lever. The brush mount is connected to the lever by a brush mount pivot pivotable in the main plane. The brush mount holds a first brush and a second brush wherein the brush mount pivot is between the first brush and the second brush.

## Description

### Field of the invention

The invention relates to slipring brushes and holders for slipring brushes, specifically for applications where a long lifetime and a high current load are required. Such slipring brushes are preferably used with sliprings for energy transmission or signal transmission as well as collectors of motors or generators.

### Description of the related art

In the US patent application publication US 2005/0029896 A1, a brush holder for holding carbon brushes against the commutator of a DC motor is disclosed. The brush is slideably held in a housing and pressed by a spring against the commutator. With increasing wear of the brush, the brush slides downwards through the housing which causes the spring to reduce its length and to reduce the force against the brush. Therefore, the pressure of the slipring brush decreases with time, which leads to changing electrical contact characteristics.

The German patent DE 967 293 discloses a brush for electrical machines, wherein a piece of carbon brush material is pressed against a slipring by means of a spring-loaded lever. To achieve a constant pressure, a long spring and a long lever is required, which makes the brush holder large.

### Summary of the invention

The problem to be solved by the invention is to provide a holder for slipring brushes which is comparatively compact in size and provides an approximately constant pressure over the lifetime of a brush, independent of the wear of the brush.

Solutions of the problem are described in the independent claims. The dependent claims relate to further improvements of the invention.

A brush holder comprises a base, a lever, and a brush mount. The base is the main body which may be used to mount the brush holder to a brush holder assembly, and which may also bear an electrical contact or connector for electrical connection. Dependent on the specific application, the base may either be of a conductive or a non-conductive material. In the case of high current brushes it may be desirable to make the base of metal which gives a high stability and enables a simple contacting and current guidance through the base. Alternatively, it may be desirable to have a high insulation. Therefore, the base may be made of an insulating material. Furthermore, an insulating material like a plastic material requires less weight than a metal body. In any case, the main function of the base is a mechanical function for supporting and holding the other components of the brush holder.

The brush mount is a component for holding at least one brush and preferably two brushes. Such brushes may be any brushes known in the art, like a sintered graphite or silver-graphite material. The brushes may also comprise bundles of wires or other suitable materials. There may be also only one brush like a foam metal brush. Preferably, the brush mount comprises a conductive material to improve conduction of electrical current to the brushes. If desired, here also an insulating material may be used. In normal applications, the brushes on a single brush mount run on the same sliding track. Therefore, they should be electrically connected, which may best be done by using a conductive material of the brush mount. The brush mount itself or the brushes at the brush mount may be electrically contacted by a litz wire or any other flexible wire which may guide the current to and through the brushes.

A lever is provided to mechanically connect the brush mount to the base. There is a base pivot for connecting the lever to the base. This base pivot is pivotable in a single plane which is referred herein as the main plane. The term of the "main plane" is primarily used to define the relationships and the movements of the various components of the brush holder itself. When such a brush holder is mounted to a slipring also called slipring module comprising sliding tracks, the main plane normally is orthogonal to the rotation axis of the slipring. This is the case when the sliding tracks are axially stacked in relation to the rotation axis. Therefore, the slipring may comprise an axis orthogonal to this plane.

In the case of a flat slipring module with sliding tracks stacked radially in relation to the rotation axis the main plane is parallel to the rotation axis of the slipring. In this case the main plane is orthogonal to the sliding track plane.

The lever is also connected to the brush mount by a brush mount pivot which is also pivotable in the main plane. According to a preferred embodiment, the brush mount pivot is pivotable only in the main plane. According to a further embodiment, the brush mount pivot is further pivotable around an axis parallel to a sliding track plane which will be defined later in detail.

The spring, which is preferably a tension spring and most preferably a coil spring, is connected between the base and the lever such that the brush mount pivot increases its distance to the base under the force of the spring. Accordingly, the brush mount and therefore the brush mount pivot may be pulled by the spring in a direction away from the base, and if properly installed relative to a slipring, asserts force against the sliding track of a slipring.

The lever may comprise a first lever section which holds the brush mount and a second lever section to which the spring is attached. The other side of the spring is attached to the base. The base pivot is between the first lever section and the second lever section. Preferably, the angle between a first line between the spring attachment point and the base pivot axis and a second line between the brush mount pivot axis and the base pivot axis is in a range between 90° and 120°, preferably between 80° and 120°. With such a configuration the direction of forces can be changed and the overall size may be reduced. With different lengths of the lever sections, the amount of force may also be modified. It is preferred, if the second lever section is shorter than the first lever section.

In a preferred embodiment, wherein the brush mount comprises at least two brush fixation means and wherein the brush mount pivot is arranged between the brush fixation means, the brush mount will pivot in such a position that both brushes are pressed against a sliding track. This tiltable dual brush mount therefore automatically aligns with the position of the sliding track and may easily compensate for variations in height or even relative position between the brush holder and the sliding track. It may even compensate for a sideward offset within the plane of the sliding track.

The brush fixation means may comprise a sleeve or rivet or a hole or thread to mount a brush to the brush mount. The fixation means also may comprise a fixation by glueing, soldering or welding the brush to the brush mount. Also, the brush may be clamped or press fitted to the brush mount. In another embodiment, the brush may comprise a metal foam, which may further comprise silver, gold, copper, brass or any other conductive material with good contact characteristics. Preferably, open pore foam may be used, but also a close pore foam is suitable for this embodiment. Preferably, such a foam may be soldered to a thin sheet of copper or any other conductive material.

In a further embodiment, a litz wire is provided between the brush mount and the base. The litz wire may be used for contacting the brushes and for guiding current to the brushes. It is preferred if the litz wire is guided within the coil spring. This may bring an additional damping to the spring, which may improve mechanical characteristics. The litz wire may be formed as ribbon wire, it can be bare or isolated.

It is further preferred, if the lever is a rigid lever. A rigid or stiff lever may allow to bring high pressure forces to the brushes without deformation of the lever.

In an alternate embodiment, the lever may be an elastic lever which is bendable only in the main plane. Furthermore, the lever preferably is firmly connected to the base. Preferably, the spring constant of the lever is designed such that it produces a desired force on the brushes. Furthermore, it is preferred if the brush mount is connected to the lever by a brush mount pivot, pivotable in the main plane as already described above. Therefore, this embodiment also has the same advantages as the embodiment above. It is preferred if the lever comprises an elastic material and preferably a spring-elastic material. This may be spring, steel, or brass material. It is also preferred if the lever is able to conduct current which would simplify the electrical connection of the brushes.

In a preferred embodiment, the lever comprises two parallel wires. Preferably, the wires are within a plane orthogonal to the main plane. These parallel wires allow movement of the lever only in the main plane and not outside of the plane, and therefore provide a stable bearing of the brushes.

In the following, further embodiments are explained which may be combined with the different embodiments of the lever as mentioned above.

In a further embodiment, the brush mount is freely pivotable in the main plane. It is further preferred to limit the angle of movement to a range of 30 degrees, preferably 20 degrees and most preferably 10 degrees.

The first brush fixation means and the second brush fixation means may define a sliding track plane. This is only a matter of definition and no real plane. This sliding track plane may tangentially contact the surface of a sliding track.

It is further preferred if the brush mount pivot is further pivotable around an axis parallel to the sliding track plane. This may allow for compensation of sideward tilts of the sliding track. In a further embodiment, a rotation blocking means is provided for blocking a rotation of the brush mount pivot around an axis orthogonal to the sliding track plane. This may further increase stability and guidance of the brushes.

### Description of Drawings

In the following the invention will be described by way of example, without limitation of the general inventive concept, on examples of embodiment with reference to the drawings.
Figure 1 shows an embodiment of a brush holder.
Figure 2 shows a front view of a brush holder.
Figure 3 shows the basic function of the lever.
Figure 4 shows an embodiment with a tilted plane.
Figure 5 shows an embodiment with a slanted sliding track plane.
Figure 6 shows a side view of an embodiment with a wire lever.
Figure 7 shows a perspective view of an embodiment with a wire lever.
Figure 8 shows an embodiment with a metal foam brush.

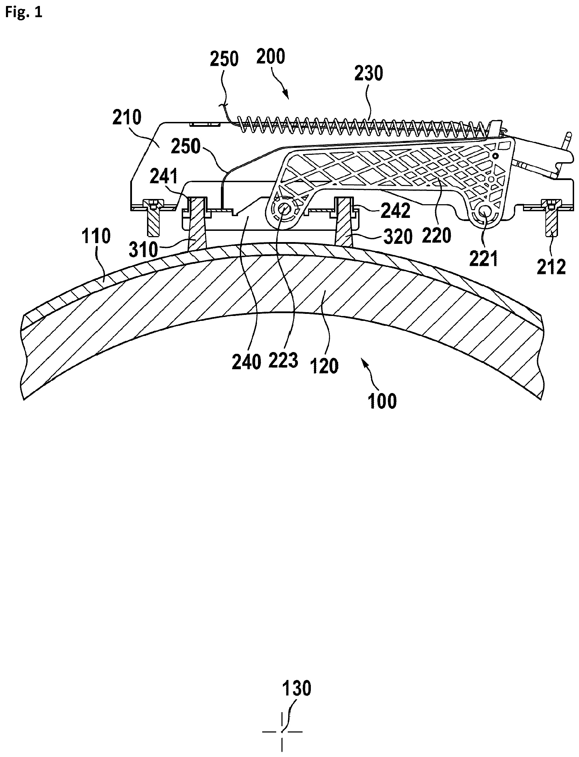

In Figure 1, an embodiment of a brush holder is shown. The brush holder 200 comprises a base 210, a lever 220, and a brush mount 240. The lever is mechanically connected to the base by a base pivot 221 which preferably has a base pivot axis 222. The brush mount 240 is connected to the lever 220 by a brush mount pivot 223 which may have a brush mount pivot axis 224. A spiral spring 230 pulls the lever such that the brush mount is pushed away from the body of the base into the direction of a sliding track 110 which is part of the slipring 100. The slipring further may comprise an insulating support 120 which holds the sliding track. The slipring may rotate about its rotation axis 130. The brush mount comprises a first brush fixation means 241 and a second brush fixation means 242. The brush fixation means may hold a first brush 310 and a second brush 320. A litz wire 250 may be provided for an electrical connection of the brushes. Preferably, the litz wire is within the coil spring. The brush holder basically is in a main plane 400 which is parallel to the drawing plane.

The first and second brush by their frictional force induce a torque into the brush mount pivot when the slipring is rotating. The leading first brush (310) may be located further distant from the brush mount pivot (223) in comparison to the distance of the trailing second brush (320) to the brush mount pivot as shown in Figure 1. When the slipring rotates clockwise the leading first brush is additionally loaded with the force induced by the brush friction torque, the trailing force is less loaded since the spring induced force is reduced by the brush friction momentum at this point. The same asymmetric position of the pivot axis is of advantage when a single brush is mounted with a contact area between brush and slipring extending to both sides of the brush mount pivot.

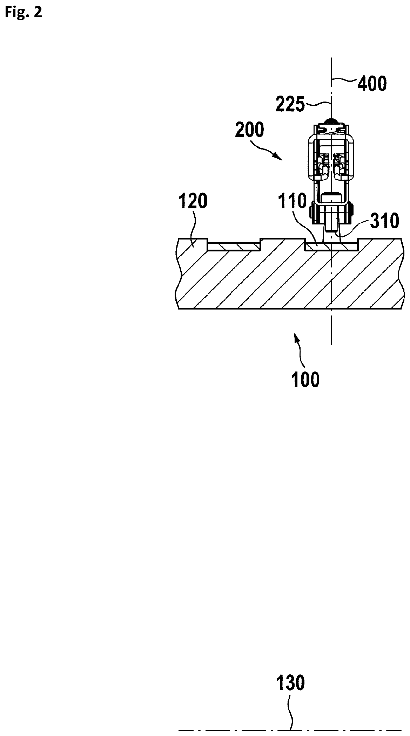

In Figure 2, a front view of the brush holder of Figure 1 is shown. Here, also the relationship to a slipring and its sliding tracks can clearly be seen. Now the main plane 400 is orthogonal to the drawing plane and further orthogonal to the rotation axis 130 of the slipring. It is preferred if blocking means are provided to prevent a rotation of the brush mount about an axis 225 within the main plane 420 and orthogonal to the rotation axis 130 of the slipring. It is obvious that if the brush mount would rotate about the axis 225, the brushes may move sideward out of the sliding tracks, which would lead to a damage of the slipring and to an interruption of the electrical contact. Such blocking means may be overlapping areas of brush mount 240 and lever 220.

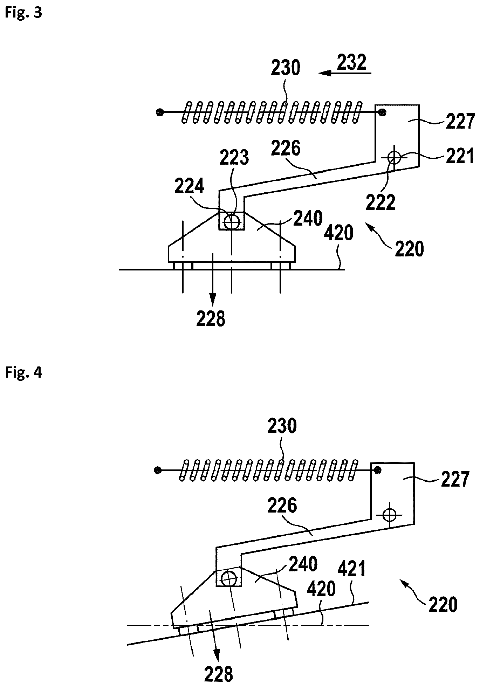

In Figure 3, the basic function of the lever is shown. The spring 230 generates a force into direction 332 which results in a force 228 which is perpendicular to the sliding track. Preferably, the distance between the brush mount pivot axis 224 and the first brush fixation means 241 is the same as the distance between the brush mount pivot axis 224 and the second brush fixation means 242, such that the forces to the brushes are the same if the brushes have the same lengths. Although it is obvious that the sliding track is circular and has a certain radius as shown in Figures 1 and 2, for simplicity reasons in the following explanations, an infinite radius is assumed which may result in a plane, herein called the sliding track plane. Besides the application of the brush holder in a slipring arrangement, it may also be used to linear sliding tracks which also be represented by the sliding track plane.

Herein a preferred embodiment of the lever 220 is shown. The lever comprises a first lever section 226 which holds the brush mount 240 and a second lever section 227 to which the spring 230 is attached. The other side of the spring is attached to the base 210. The base pivot 221 is between the first lever section 226 and the second lever section 227. Preferably, the angle between a second line between the spring attachment point and the base pivot axis 222 and a first line between the brush mount pivot axis 224 and the base pivot axis 222 is in a range between 80° and 120°. With such a configuration the direction of forces can be changed and the overall size may be reduced. With different lengths of the lever sections, the amount of force may also be modified. It is preferred, if the second lever section 227 is shorter than the first lever section 226.

In this Figure, a perfect configuration is shown where the sliding track plane 420 is a leveled configuration. Basically, this leveled configuration may be freely chosen as long as there is a main force component 228 perpendicular to the sliding track plane 420.

In Figure 4, an embodiment with a tilted plane is shown. Herein, the sliding track plane 420 is tilted as shown with reference number 421. This may easily be compensated by the brush mount which pivots accordingly, such that again both brushes are in contact with the plane. Accordingly, there is again a force 228 perpendicular to the tilted sliding track plane 421.

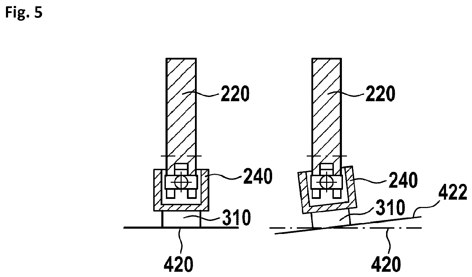

In Figure 5, an embodiment with a slanted sliding track plane is shown. Herein, the sliding track plane 420 is in a slanted configuration as shown by reference number 422. This may occur if the rotation axis of the slipring is not precisely under a right angle to the main plane. There may be means to allow adaption of a slanted plane 422 such the brush always smoothly runs with its full contacting surface at the sliding track, and therefore provides the best possible contact. Otherwise, the brush may only run with an edge at the sliding track. This may be acceptable under certain circumstances, if the axis of the slipring is in a constant position non-perpendicular to the main plane. In this case, with increasing wear of the brush, the brush would increase its contact surface to the sliding track, as the edge would be worn down. For the case the slipring is not eccentrical or moving otherwise, there would be a continuous movement and the angle of the slanted plane may change continuously, which would not allow to provide a constant wear of the brush, a normal slipring brush would have sever changing contact properties. With the above-mentioned embodiments of the brush holder, this may also be dynamically compensated, as the brush may easily follow the movements of the sliding track.

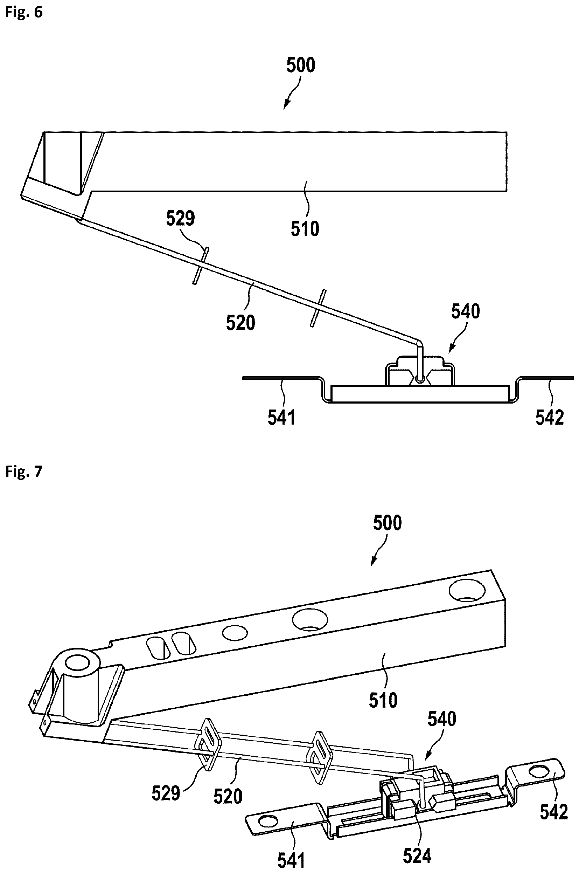

In Figure 6 a side view of an embodiment of a brush holder 500 with an elastic lever 520 comprising wires is shown. The lever 520 comprises two parallel wires which are fixed together at their ends and which are within a plane orthogonal to the main plane. They may be injection molded or otherwise be fixedly held within the base 510. The wires may be one piece connected at the brush mount end. As the wires are connected together at both ends, they cannot twist and may only be bent in one plane (the main plane). Preferably, the spring constant of the lever is designed such that it produces a desired force on the brushes. Furthermore, it is preferred if the brush mount is connected to the lever by a brush mount pivot 524, pivotable in the main plane as already described above. Therefore, this embodiment also has the same advantages as the embodiment above. The material of the spring may be spring, steel, or brass material. It is also preferred if the lever is able to conduct current which would simplify the electrical connection of the brushes. There may be spacers 529 at the wires for further stabilizing the wires.

Figure 7 shows a perspective view of an embodiment with a wire lever. It further shows the brush mount 540 with first brush fixation means 541 and second brush fixation means 542. These brush fixation means may hold a brush or a sleeve for holding a brush.

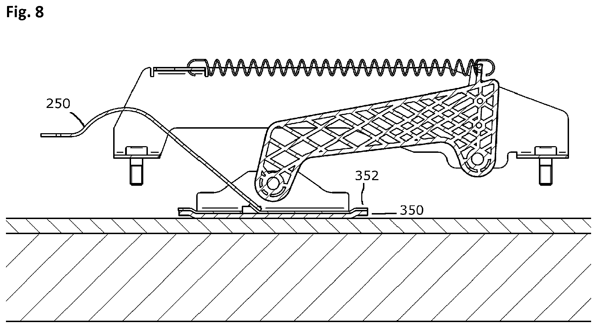

Figure 8 shows an embodiment with a metal foam brush 350. The base and the lever are basically the same a shown in figure 1. There are a few exceptions like the foam brush which is mounted (preferably soldered or welded) to a foam brush carrier 352, which may be a sheet of copper or any other conductive material. Preferably, the foam brush carrier is connected to a litz wire which may be a wire as shown or a wire as shown in any of the other figures. The brush mount is also modified to hold the foam brush carrier and/or the foam brush. For this purpose, it preferably has a planar surface, which may be matched to at least one of the foam brush (with, length, radius) and/or the sliding track (width, radius). The foam brush carrier can be a part of the brush mount. Here a planar sliding track section is shown. It may be part of a linear sliding track or of a disc type planar slipring. For a drum slipring module, the bottom side of the foam brush carrier may be bent to the radius of the sliding track.

### List of reference numerals

- 100: slipring
- 110: sliding track
- 120: insulating support
- 130: slipring rotating axis
- 200: brush holder
- 210: base
- 212: fixation screw
- 220: lever
- 221: base pivot
- 222: base pivot axis
- 223: brush mount pivot
- 224: brush mount pivot axis
- 225: axis in main plane and orthogonal to the rotation axis of the slipring
- 226: first lever section
- 227: second lever section
- 228: force to sliding track
- 230: spring
- 232: direction of spring force
- 240: brush mount
- 241: first brush fixation means
- 242: second brush fixation means
- 250: litz wire
- 310: first brush
- 320: second brush
- 350: metal foam brush
- 352: metal foam brush carrier
- 400: main plane
- 410: plane through brush fixation means
- 420: sliding track plane
- 421: tilted plane
- 422: slanted plane
- 500: brush holder
- 510: base
- 520: lever
- 524: brush mount pivot
- 529: spacer
- 540: brush mount
- 541: first brush fixation means
- 542: second brush fixation means

## Claims

1. A brush holder (200) comprises a brush mount (240) held by a lever (220) at a base (210), wherein
the lever (220) is connected by a base pivot (221) to the base (210) and pivotable in a main plane (400) and
a spring (230) is provided between the base (210) and the lever (220), **characterized in, that**
the brush mount (240) is connected to the lever (220) by a brush mount pivot (223) pivotable in the main plane (400).

2. A brush holder (200) according to claim 1,
**characterized in, that**
the spring (230) is a tension spring and preferably a coil spring.

3. A brush holder (200) according to claim 1 or 2,
**characterized in, that**
a litz wire (250) is provided between the brush mount (240) and the base (210) which preferably is guided within the coil spring (230).

4. A brush holder (200) according to any one of the previous claims, **characterized in, that**
the lever comprises a first lever section (226) which holds the brush mount (240) and a second lever section (227) to which the spring (230) is attached, wherein the base pivot (221) is between the first lever section (226) and the second lever section (227) and
preferably the angle between a first line between the brush mount pivot axis 224 and the base pivot axis 222 and a second line between the spring attachment point and the base pivot axis 222 is in a range between 80° and 120° and
preferably the second lever section (227) is shorter than the first lever section (226).

5. A brush holder (200) according to any one of the previous claims, **characterized in, that**
the brush mount (240) is pulled by the spring (230) in a direction away from the base (210).

6. A brush holder (200) according to any one of the previous claims, **characterized in, that**
the lever (220) is a rigid lever.

7. A brush holder (200) comprises a brush mount (240) held by a lever (220) at a base (210), wherein
the lever (220) is an elastic lever which is bendable only in a main plane (400) and the lever (220) is firmly connected to the base,
**characterized in, that**
the brush mount (240) is connected to the lever (220) by a brush mount pivot (223) pivotable in the main plane (400).

8. A brush holder (200) according to claim 7,
**characterized in, that**
the lever (220) comprises elastic material and preferably spring elastic material.

9. A brush holder (200) according to claim 8,
**characterized in, that**
the lever (220) comprises two parallel wires.

10. A brush holder (200) according to any one of the previous claims, **characterized in, that**
the brush mount (240) comprises at least a first brush fixation means (241) and a second brush fixation means (242) wherein the brush mount pivot (223) is between the first brush fixation means (241) and the second brush fixation means (242).

11. A brush holder (200) according to any one of the previous claims, **characterized in, that**
the brush mount (240) is freely pivotable in the main plane (400) within an angle range of 30°, preferably 20° and most preferably 10°.

12. A brush holder (200) according to any one of the previous claims, **characterized in, that**
the first brush fixation means (241) and the second brush fixation means (242) define a sliding track plane (420).

13. A brush holder (200) according to claim 12,
**characterized in, that**
the brush mount (240) is further pivotable around an axis (226) parallel to the sliding track plane (420).

14. A brush holder (200) according to claim 12 or 12,
**characterized in, that**
a rotation blocking means is provided for blocking a rotation of the brush mount pivot (223) around an axis (226) orthogonal to the sliding track plane (420).

15. A brush holder (200) according to any one of the previous claims, **characterized in, that**
the brush mount (240) holds at least two sliding brushes where at least one comprises at least one of a sintered carbon material or a bundle of wires.
